# EUROPEAN PATENT SPECIFICATION

(11) **EP 2 910 068 B1**
(45) Date of publication and mention of the grant of the patent: **04.10.2017**
(21) Application number: 12886932.8
(22) Date of filing: 22.10.2012
(51) Int. Cl.: H04W 52/02, H04W 72/04, H04W 84/04

(54) **TRANSITION METHOD INTO SLEEPING MODE**
VERFAHREN ZUM ÜBERGANG IN EINEN RUHEMODUS
PROCÉDÉ DE TRANSITION VERS UN MODE DE SOMMEIL

(43) Date of publication of application: 26.08.2015
(73) Proprietor: Avago Technologies General IP (Singapore) Pte. Ltd., Singapore 768923 (SG)
(72) Inventor: SUN, Pengfei, Beijing 101199 (CN); GAO, Chunyan, Beijing 100035 (CN); WEI, Na, Beijing 100018 (CN); ZENG, Erlin, Beijing 100096 (CN); BAI, Wei, Beijing 100028 (CN); HAN, Jing, Beijing 100028 (CN); WANG, Haiming, Beijing 100015 (CN)
(74) Representative: Jehle, Volker Armin
(86) International application number: PCT/CN2012/083324
(87) International publication number: WO 2014/063294

(56) References cited:
- EP-A1- 2 339 887
- WO-A1-2010/104433
- WO-A1-2010/151184
- WO-A2-2011/085238
- US-A1- 2008 039 154
- US-A1- 2010 220 641
- US-A1- 2010 290 389
- US-A1- 2012 149 419
- US-A1- 2012 163 305

## Description

### Field of the invention

The present invention relates to an apparatus, a method, and a computer program product for a sleeping mode. More particularly, the present invention relates to an apparatus, a method, and a computer program product for a transition method into and/or out of the sleeping mode.

### Background of the invention

### Abbreviations

- 3GPP: 3^{rd} Generation Partnership Project
- CC: Component Carrier
- CP: Cyclic Prefix
- CRC: Cyclic Redundancy Check
- CRS: Common Reference Signal
- CSI-RS: Channel State Information-Reference Signal
- DL: Downlink
- DTX: Discontinuous Transmission
- eNB: Enhanced Node B (Node B in LTE)
- HARQ: Hybrid Acknowledge ReQuest
- ICT: Information and Communication Technology
- LTE™: Long Term Evolution
- LTE-A™: Long Term Evolution Advanced
- MBSFN: Multicast-Broadcast Single Frequency Network
- MIB: Master Information Block
- MME: Mobility Management Entity
- NCT: New Carrier Type
- PA: Power Amplifier
- PCC: Primary Cell Carier
- PDCH: Physical Discovery Channel
- PS: Power Saving
- PSS: Primary Synchronization Sequence
- RAN: Radio Access Network
- RF: Radio Frequency
- RNTI: Radio Network Temporary Identifier
- RRC: Radio Resource Control
- SA-NCT: Stand-alone NCT
- SCC: Secondary Cell Carrier
- SFN: System Frame Number
- SIB: System Information Block
- SSS: Secondary Synchronization Sequence
- TR: Technical Report
- UE: User Equipment
- UL: Uplink

The power consumption has always been carefully handled for UE in LTE standardization due to the limited power supplies. However, the power consumption on the network side was somehow less mentioned. The network is deemed as power sufficient and the focus was more on the network capacity and coverage. However, the situation is changing due to the fast increasing concern on the carbon footprint and the operator cost. Although the ICT industry only accounts for a relatively small portion of the overall energy consumption of human being's activity [1], it is imperative to make it more power efficiency given the mobile communication sector is about to triple by 2020.

Conventionally, LTE eNB must keep on transmitting DL signals no matter if there is an UE to serve. These DL signals include broadcast signals such as PSS/SSS/MIB and CRS. This mandatory transmission wastes a great amount of energy as the network is under low load most of the time [2].

An example of a conventional prior art wireless communication system is given in WO 2010/151184 A1.

Significant power saving is possible if the future wireless networks could intelligently avoid these wastes.

Standalone new carrier type (SA-NCT) is considered to be one of the important topics for Reel-12 enhancement, where new features are taken into account. A more power efficient lean carrier is proposed by Ericsson [3] to increase the power efficiency. Another use case is the local area network, where the cell size is considerably smaller than a typical macro cell. In this case the local area cell may serve only a few UEs, sometimes there are even no UE served and the load may undergo large variance from time to time. Thus, power saving could be achieved by accommodating this variance. In [7], an ultra-lean booster carrier concept is proposed, which is used in local area to boost network capacity but with enhanced interference minimization and energy efficiency.

Among those power efficiency techniques, sleeping mode is a very effective way to reduce power consumption during low network load condition [2], for example in the rural area solar powered eNB or the dense deployed local area eNBs. The eNB transmits minimum broadcast signal or totally turns off in the sleeping mode so that the PA could be turned off most of the time to save power. Then, the eNB wakes up when service is needed.

Several ways were proposed to realize such an eNB sleeping mode. According to some proposals, there may be different levels of sleeping to achieve different level of power efficiency.

A somehow sleeping could be achieved with current 3GPP standards via the MBSFN subframes. An eNB configures MBSFN subframes when load is low and then eNB could turn off the RF during these subframes to save power. In [2], the cell DTX could further save the power due compared to the MBSFN technique due to the reduced CRS and minimum broadcast signals. However, this sleeping mode may impact the UE behavior depending on how much the DL signal is reduced. For example, in the IDLE mode, UE needs to perform mobility based on the DL broadcast signals, such as PSS/SSS/MIB/CRS etc.

In addition, a new UE entering the network needs to perform initial access based on the DL signals. Therefore, a light sleeping of this kind shall be able to support idle UE to camp on or a new UE to do initial access. If a cell has no idle UE camping on, an eNB may enter a deeper sleeping that only sends beacons to allow UE to sense the cell. However, the beacon may be too sparse that an UE could not camp or do initial access to the cell. In this case, a wake up scheme could be used by UE to wake up the cell if necessary. At last, eNB could totally turn off its transmission. In this case, UE is unable to know this cell at all. The coverage hole caused by such sleeping could be compensated by neighbor cells. Related discussions can be found in 3GPP RAN3 [4].

If an UE is in the idle mode, the network has no information about the individual UE and can reach it only by paging. In contrast thereto, in the connected mode, there is an RRC connection between UE and network, and the network maintains information about the individual UE.

Currently there are ongoing discussions in 3GPP RAN3 [4]. However, only two states are proposed. That is, a cell is either "on" for normal transmission or "off" for sleeping [5]. When a cell is turned off, its coverage hole will be compensated by the neighbor cells. The impact to the idle UE in such scenario is discussed and summarized in [8].

For example, it is proposed a method to consult MME to get idle UE's information. In [6], a so called "probing mechanism" is used to determine in a system which cell(s) may be activated (i.e., to move out of sleeping mode) or deactivated (i.e., to move into sleeping mode). In such mechanism, at least a portion of the UEs within a macro cell #A's coverage will be configured to measure certain downlink pilots from some other smaller cells and report accordingly the measurements to cell #A. The network can decide based on the collected measurements and UE traffic status which small cell(s) need to be activated or may stay in deactivated state.

However, such probing mechanism requires a) a macro cell is always on and UEs are connected to it for the sake of configuration and reporting, and b) may need inter-eNB signaling for activation or deactivation requests as well. Therefore, it is not straightforward to extend such mechanism to standalone new carrier types. This is because there may be no compensation cell in rural area deployment of a lean carrier. In addition, in the future local area network in high frequency, such as 3.5G, it may be difficult to expand the cell size to compensate a sleeping eNB.
[1] Ericsson, "Carbon footprint of mobile communications and ICT"
[2] Ericsson, "Reducing Energy Consumption in LTE with Cell DTX"
[3] Ericsson, "Views on TD-LTE for Rel-12", presentation on CMCC TD-LTE workshop, Apr. 2012.
[4] 3GPP TR 36.927 v10.0.0, "Potential solutions for energy saving for E-UTRAN"
[5] 3GPP TR 36.551
[6] 3GPP RAN3 paper on "probing mechanism", R3-103693
[7] Ericsson Rel-12 workshop, RWS-120003
[8] 3GPP R3-120621

### Summary of the invention

It is an object of the present invention to improve the prior art.

In particular, it is an object to ensure that cells may enter into a sleeping mode without the need for compensating coverage by other cells such as macro cells. Furthermore, impact on UE side should be rather small.

According to a first aspect of the invention, there is provided an apparatus, comprising at least one processor, at least one memory including computer program code, and the at least one processor, with the at least one memory and the computer program code, being arranged to cause the apparatus to at least perform: camping on a first cell in a terminal mode, wherein, in the terminal mode, a mode-enabling downlink signal from the first cell is required; checking if a transition information about an intended transition of the first cell to a sleeping mode is received and if the apparatus camps in the terminal mode on the first cell, wherein in the sleeping mode of the first cell the mode-enabling downlink signal is not received from the first cell; transmitting a complaint to the first cell if the transition information is received and the apparatus camps in the terminal mode on the first cell.

According to a second aspect of the invention, there is provided an apparatus, comprising camping means adapted to camp on a first cell in a terminal mode, wherein, in the terminal mode, a mode-enabling downlink signal from the first cell is required; checking means adapted to check if a transition information about an intended transition of the first cell to a sleeping mode is received and if the apparatus camps in the terminal mode on the first cell, wherein in the sleeping mode of the first cell the mode-enabling downlink signal is not received from the first cell; transmitting means adapted to transmit a complaint to the first cell if the transition information is received and the apparatus camps in the terminal mode on the first cell.

According to a third aspect of the invention, there is provided a terminal, comprising an apparatus according to any of the first and second aspects, and at least one radio interface configured for communication with at least the first cell.

According to a fourth aspect of the invention, there is provided an apparatus, comprising at least one processor, at least one memory including computer program code, and the at least one processor, with the at least one memory and the computer program code, being arranged to cause the apparatus to at least perform: transmitting, in a first mode of the apparatus, a terminal-mode-enabling downlink signal enabling a terminal to camp in a terminal mode on the apparatus; preventing to transmit, in a sleeping mode of the apparatus, the terminal-mode-enabling downlink signal; informing, if the apparatus is in the first mode, about an intended transition of the apparatus from the first mode to the sleeping mode, checking if at least a predefined number of complaints is received in response to the informing about the intended transition; and prohibiting to transit from the first mode to the sleeping mode if at least the predefined number of complaints is received.

According to a fifth aspect of the invention, there is provided an apparatus, comprising transmitting means adapted to transmit, in a first mode of the apparatus, a terminal-mode-enabling downlink signal enabling a terminal to camp in a terminal mode on the apparatus; preventing means adapted to prevent to transmit, in a sleeping mode of the apparatus, the terminal-mode-enabling downlink signal; informing means adapted to inform, if the apparatus is in the first mode, about an intended transition of the apparatus from the first mode to the sleeping mode, checking means adapted to check if at least a predefined number of complaints is received in response to the informing about the intended transition; and prohibiting means adapted to prohibit to transit from the first mode to the sleeping mode if at least the predefined number of complaints is received.

According to a sixth aspect of the invention, there is provided a cell, comprising an apparatus according to any of the fourth and fifth aspects; and at least one controller for controlling a radio interface to transmit the idling-enabling downlink signal to the terminal device.

According to a seventh aspect of the invention, there is provided a A method, comprising camping on a first cell in a terminal mode, wherein, in the terminal mode, a mode-enabling downlink signal from the first cell is required; checking if a transition information about an intended transition of the first cell to a sleeping mode is received and if an apparatus performing the method camps in the terminal mode on the first cell, wherein in the sleeping mode of the first cell the mode-enabling downlink signal is not received from the first cell; transmitting a complaint to the first cell if the transition information is received and the apparatus camps in the terminal mode on the first cell.

According to an eighth aspect of the invention, there is provided a method, comprising transmitting, in a first mode of the apparatus, a terminal-mode-enabling downlink signal enabling a terminal to camp in a terminal mode on the apparatus; preventing to transmit, in a sleeping mode of the apparatus, the terminal-mode-enabling downlink signal; informing, if the apparatus is in the first mode, about an intended transition of the apparatus from the first mode to the sleeping mode, checking if at least a predefined number of complaints is received in response to the informing about the intended transition; and prohibiting to transit from the first mode to the sleeping mode if at least the predefined number of complaints is received.

Each of the methods of the seventh and eighth aspects may be a method of transition.

According to a ninth aspect of the invention, there is provided a computer program product comprising a set of instructions which, when executed on an apparatus, is configured to cause the apparatus to carry out the method according to any one of the seventh and eighth aspects. The computer program product may be embodied on a computer readable medium.

According to some embodiments of the invention, for example at least the following advantages are achieved:

The eNB is enabled to switch between different levels of sleeping and the active mode. Thus, an enhanced power efficiency compared with current sleeping schemes is achieved.

The one or more sleeping modes do not require always on macro coverage for compensation of a whole. Thus, future NCT requirements for rural deployment and corresponding requirements for local area networks of 3.5G and smart phone background data may be met.

Furthermore, UE's behavior is not seriously affected, that is, no major changes on the UE side are required.

It is to be understood that any of the above modifications can be applied singly or in combination to the respective aspects to which they refer, unless they are explicitly stated as excluding alternatives.

### Brief description of the drawings

Further details, features, objects, and advantages are apparent from the following detailed description of the preferred embodiments of the present invention which is to be taken in conjunction with the appended drawings, wherein
Fig. 1 shows an apparatus according to an embodiment of the invention;
Fig. 2 shows a method according to an embodiment of the invention;
Fig. 3 shows an apparatus according to an embodiment of the invention; and
Fig. 4 shows a method according to an embodiment of the invention.

### Detailed description of certain embodiments

Herein below, certain embodiments of the present invention are described in detail with reference to the accompanying drawings, wherein the features of the embodiments can be freely combined with each other unless otherwise described. However, it is to be expressly understood that the description of certain embodiments is given for by way of example only, and that it is by no way intended to be understood as limiting the invention to the disclosed details.

Moreover, it is to be understood that the apparatus is configured to perform the corresponding method, although in some cases only the apparatus or only the method are described.

According to embodiments of the invention, it is provided an eNB sleeping scheme to allow eNB to enter or come out of different sleeping levels and the active mode.

An embodiment of the invention is explained based on an exemplary scenario in which two sleeping modes, Mode #A and Mode #B, are supported in the cell such as a cell of an eNB or a future NCT. These modes have different features to achieve different power efficiency:
- Mode #A: eNB may allow initial access and IDLE UEs camping but consumes less power than a fully operated mode, which transmits all defined mandatory broadcast signals such as CRS/PSS/SSS/MIB/SIB in LTE system and, thus, allows many UEs to camp in a connected mode For example, it could be a CRS free NCT configuring MBSFN subframes with CSI-RS for measurement. The UE could camp on the cell and/or transmit/receive data on certain subframes. That is, in mode #A, at least some of the defined mandatory broadcast signals for the fully operated mode are not transmitted or less frequently transmitted than foreseen for the fully operated mode. However, the reduction of broadcast signals is such that UEs may still camp on the eNB.
- Mode #B: The broadcast signals are further reduced, for example by removing those for measurement purposes such as CSI-RS and/or CRS and those for indicating the system information such as MIB and/or SIB. Instead only beacon like signal such as PDCH is transmitted. This mode may not allow UE camping or initial access; UE may sense the eNB but cannot perform measurements.

When there is no connected UE or only a few of connected UEs, the eNB may enter sleeping Mode #A to save power. If no idle UE is camping on, the eNB may enter sleeping Mode #B to further save power. eNB collects information about camping idle UEs before entering into Mode #B. A UE may wake up the eNB in Mode #B via UL signaling upon the detection of the limited broadcast signals.

In the following, a procedure according to some embodiments of the invention is described that allows eNB to transit between the different sleeping modes and the active mode to adapt the power consumption to the traffic load.

When eNB intends to change its mode, eNB sends information of system information change. This may be done e.g. by paging or by a new signaling from eNB dedicated to this purpose. The updated system information or the new signaling requests in an implicit or explicit manner the idle UE to camp on a neighbor cell or to send a possible complaint report within a defined time window if no neighbor cell to camp on. The new signaling from eNB may be a paging message with one indication for UE to perform the process mentioned above. The new signaling from eNB may be be a paging message with a defined special ANTI.

The UE may reply to this information on system information change by a complaint report to deny the eNB entering Mode #B. For example, the complaint report may reuse the RRC re-establishment procedure with some modifications.

If eNB does not receive a complaint report, eNB considers no idle UE being in coverage and may decide to enter into sleeping Mode #B. Then eNB changes the DL broadcast signals with mode indication.

Otherwise, based on the number of complaint report received, eNB decides whether to change the operation mode and to send broadcast signaling for mode indication. For example, in some embodiments, a single complaint report may be sufficient to prevent the mode change, while according to other embodiments at least two or even more complaint reports are required to prevent the mode change.

When an idle UE enters the sleeping cell, it may know that the cell is in Mode #B due to the limited DL signals. It may wake up the cell via UL signaling, which may indicate what kind of service is needed. If the requested load is not high and delay insensitive, the eNB may only wake up to Mode #A. Otherwise, eNB may wake up to a fully operating mode to deliver better service.

In the following, an exemplary implementation according to an embodiment of the invention is outlined:

In order to broadcast the "about-to-sleep" (intention to sleep) indication, eNB may just send a normal paging information of system information change. Then the sleeping configuration could be included in the system information, for example SIB1. An example is given below: two bits of *sleepingModeIndicator* could be used to indicate current sleeping level. UE knows the corresponding DL signals based on pre-defined pattern. When the *aboutToSleepIndicator* is set to true, UE knows the cell will go to sleep (Mode #B) in the SFN indicated by *sleepingStartingPoint.* An exemplary signaling design is given in Table 1.

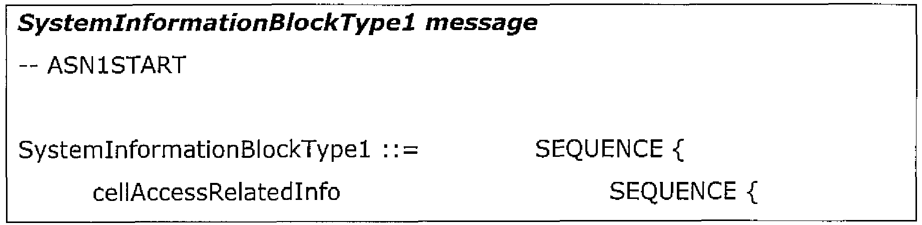

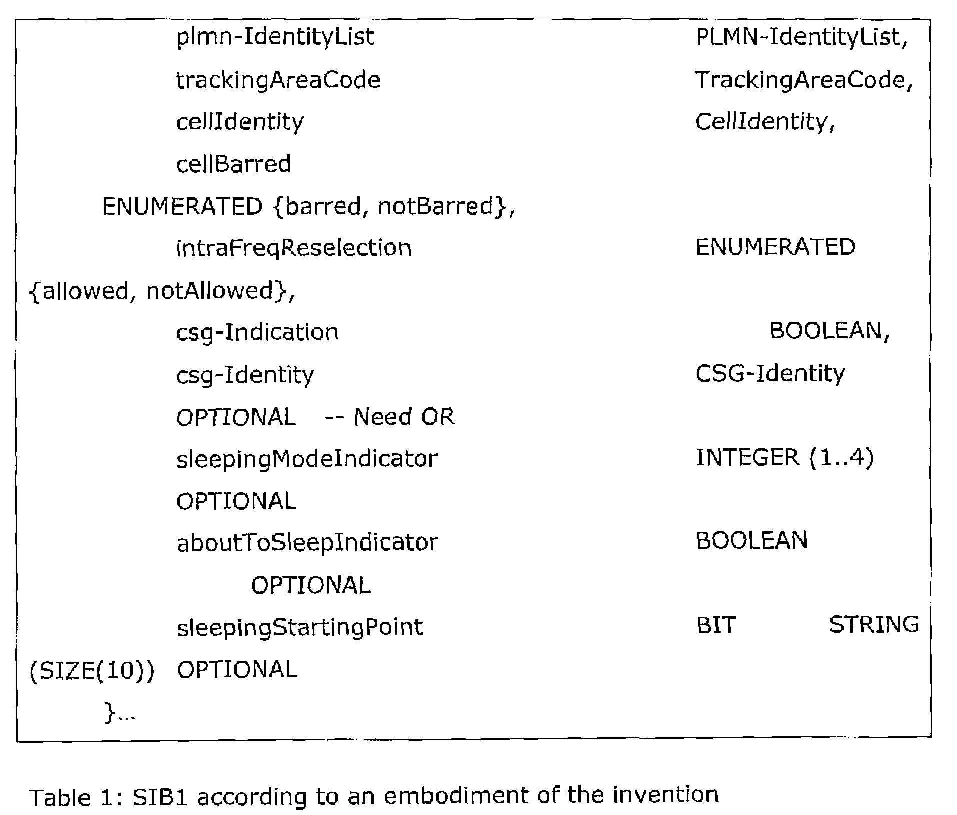

According to embodiment of the invention, the complaint report is realized by reusing the RRC re-establishment signaling. Once UE receives DL signaling telling that eNB is about to enter the power saving Mode#B, it triggers RRC connection re-establishment procedure. However, according to embodiment of the invention, the procedure is modified over the conventional procedure by the following features:
1. It will do cell selection/re-selection with setting the currently camped cell as low priority, that is to let UE try to camp on neighbor cells;
2. If UE could successfully camp on another cell than the current cell, it aborts the connection re-establishment procedure and does not send a complaint report;
3. If UE could not camp on any other cell, but needs to select the current cell, it continues the re-establishment procedure, with setting the re-establishment cause as "powerSavingComplain".

This implementation has the advantage to reduce the standardization impact.

One example of the signaling design is shown in Table 2.

**Table 2: ReestablishmentCause according to an embodiment of the invention**

| |
|---|
| ```
 ReestablishmentCause ::= ENUMERATED {
 reconfigurationFailure, handoverFailure, otherFailure,
 powerSavingCompain}
``` |

In the exemplary embodiment described above, UEs could not camp in idle mode on the eNB if the latter is in Mode #B. According to other embodiments, there are sleeping modes that prevent camping UEs in other modes on the eNB because the required information is not transmitted in this sleeping mode. Examples for other modes are a connected mode and specially designed energy saving modes for the UE. In one of the sleeping modes, such as Mode #B described hereinabove, the UE may not camp in any mode on the eNB but may sense the UE and may wakeup it.

The mode in which the eNB is before it performs a mode change may be a sleeping mode, too, which is different from the sleeping mode into which a transition is intended, or it may be a fully operating mode which allows the terminal to camp in any mode on the cell.

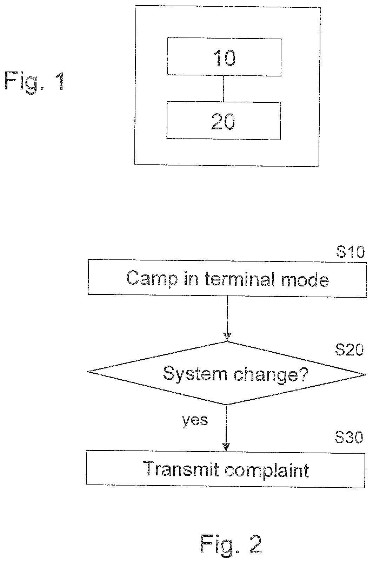

Fig. 1 shows an apparatus according to an embodiment of the invention. The apparatus may be a base station such as a eNB or a part thereof. Fig. 2 shows a method according to an embodiment of the invention. The apparatus according to Fig. 1 may perform the method of Fig. 2 but is not limited to this method. The method of Fig. 2 may be performed by the apparatus of Fig. 1 but is not limited to being performed by this apparatus.

The apparatus comprises at least one processor 10 and at least one memory 20. The at least one memory 20 includes computer program code, and the at least one processor 10, with the at least one memory 20 and the computer program code is arranged to cause the apparatus to at least perform: camping (S10) on a first cell in a terminal mode, wherein, in the terminal mode, a mode-enabling downlink signal from the first cell is required.

It is checked (S20) if an information about an intended transition of the first cell to a sleeping mode is received if the apparatus camps in the terminal mode on the first cell. For example, it is first checked if the information is received and then if the apparatus camps in the terminal mode, or it is checked if the information is received only when the apparatus camps in the terminal mode. Or, both checks may be performed simultaneously. In the sleeping mode of the first cell the mode-enabling downlink signal is not received from the first cell.

If the information is received and the apparatus camps in the terminal mode on the first cell, a complaint is transmitted (S30) to the first cell. In some embodiments, the apparatus first checks if it may camp on another cell and it transmits the complaint only if camping on another cell is not possible.

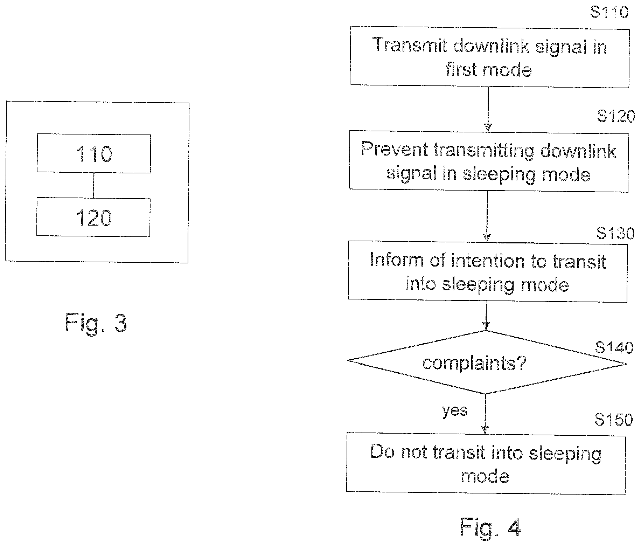

Fig. 3 shows an apparatus according to an embodiment of the invention. The apparatus may be a base station such as an eNB or a part thereof. Fig. 4 shows a method according to an embodiment of the invention. The apparatus according to Fig. 3 may perform the method of Fig. 4 but is not limited to this method. The method of Fig. 4 may be performed by the apparatus of Fig. 3 but is not limited to being performed by this apparatus.

The apparatus comprises at least one processor 110 and at least one memory 120. The at least one memory 120 includes computer program code, and the at least one processor 110, with the at least one memory 120 and the computer program code is arranged to cause the apparatus to at least perform: transmitting (S110), in a first mode of the apparatus, a terminal-mode-enabling downlink signal. The terminal-mode-enabling downlink signal enables a terminal to camp in a certain terminal mode on the apparatus. On the other hand, in a sleeping mode of the apparatus, it is prevented (S120) to transmit, the terminal-mode-enabling downlink signal.

If the apparatus is in the first mode, it informs (S130) about an intended transition of the apparatus from the first mode to the sleeping mode. Then, it checks (S140) if at least a predefined number of complaints is received. If at least the predefined number of complaints is received, the apparatus does not transit into the sleeping mode, i.e. it is prohibited (S150) to transit from the first mode to the sleeping mode.

A terminal mode may be e.g. one of a connected mode, an idle mode, and a specially designed mode, e.g. for energy savings.

A terminal may be a machine type device, a user equipment, a mobile phone, a laptop, a smartphone, a tablet PC, or any other device that may attach to the mobile network. A base station may be a NodeB, an eNodeB or any other base station of a radio network. A cell may be a cell of any kind of base station.

Embodiments of the invention are described based on an LTE-A system but embodiments of the invention may be applied to other radio access technologies such as LTE, WiFi, WLAN, UMTS, HSPA, if a connected mode is foreseen.

If not otherwise stated or otherwise made clear from the context, the statement that two entities are different means that they are differently addressed in their respective network. It does not necessarily mean that they are based on different hardware. That is, each of the entities described in the present description may be based on a different hardware, or some or all of the entities may be based on the same hardware.

According to the above description, it should thus be apparent that exemplary embodiments of the present invention provide, for example a controller apparatus such as a user equipment, a UE, or a component thereof, an apparatus embodying the same, a method for controlling and/or operating the same, and computer program(s) controlling and/or operating the same as well as mediums carrying such computer program(s) and forming computer program product(s). Furthermore, it should thus be apparent that exemplary embodiments of the present invention provide, for example a base station apparatus such as a NodeB or an eNodeB, or a component thereof, an apparatus embodying the same, a method for controlling and/or operating the same, and computer program(s) controlling and/or operating the same as well as mediums carrying such computer program(s) and forming computer program product(s).

According to exemplarily embodiments of the present invention, a system may comprise any conceivable combination of the thus depicted devices/apparatuses and other network elements, which are configured to cooperate with any one of them.

In general, it is to be noted that respective functional blocks or elements according to above-described aspects can be implemented by any known means, either in hardware and/or software/firmware, respectively, if it is only adapted to perform the described functions of the respective parts. The mentioned method steps can be realized in individual functional blocks or by individual devices, or one or more of the method steps can be realized in a single functional block or by a single device.

Generally, any structural means such as a processor or other circuitry may refer to one or more of the following: (a) hardware-only circuit implementations (such as implementations in only analog and/or digital circuitry) and (b) combinations of circuits and software (and/or firmware), such as (as applicable): (i) a combination of processor(s) or (ii) portions of processor(s)/software (including digital signal processor(s)), software, and memory(ies) that work together to cause an apparatus, such as a mobile phone or server, to perform various functions) and (c) circuits, such as a microprocessor(s) or a portion of a microprocessor(s), that require software or firmware for operation, even if the software or firmware is not physically present. Also, it may also cover an implementation of merely a processor (or multiple processors) or portion of a processor and its (or their) accompanying software and/or firmware, any integrated circuit, or the like.

Generally, any procedural step or functionality is suitable to be implemented as software/firmware or by hardware without changing the idea of the present invention. Such software may be software code independent and can be specified using any known or future developed programming language, such as e.g. Java, C++, C, and Assembler, as long as the functionality defined by the method steps is preserved. Such hardware may be hardware type independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components. A device/apparatus may be represented by a semiconductor chip, a chipset, or a (hardware) module comprising such chip or chipset; this, however, does not exclude the possibility that a functionality of a device/apparatus or module, instead of being hardware implemented, be implemented as software in a (software) module such as a computer program or a computer program product comprising executable software code portions for execution/being run on a processor. A device may be regarded as a device/apparatus or as an assembly of more than one device/apparatus, whether functionally in cooperation with each other or functionally independently of each other but in a same device housing, for example.

Apparatuses and/or means or parts thereof can be implemented as individual devices, but this does not exclude that they may be implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

The present invention also covers any conceivable combination of method steps and operations described above, and any conceivable combination of nodes, apparatuses, modules or elements described above, as long as the above-described concepts of methodology and structural arrangement are applicable.

It is to be understood that what is described above is what is presently considered the preferred embodiments of the present invention. However, it should be noted that the description of the preferred embodiments is given by way of example only and that various modifications may be made without departing from the scope of the invention as defined by the appended claims.

## Claims

1. A terminal, comprising
at least one processor (10),
at least one memory (20) including computer program code, and
the at least one processor, with the at least one memory and the computer program code, being arranged to cause the terminal to at least perform:
sensing a first cell based on a sensing-enabling downlink signal from the first cell, wherein the sensing-enabling downlink signal does not enable the terminal to camp in a terminal mode on the first cell, wherein the terminal mode is one of a connected mode, an idle mode and an energy savings mode;
camping on the first cell in the terminal mode, wherein, in the terminal mode, a mode-enabling downlink signal from the first cell is required;
checking if a transition information about an intended transition of the first cell to a sleeping mode is received and if the terminal camps in the terminal mode on the first cell, wherein in the sleeping mode of the first cell the mode-enabling downlink signal is not received from the first cell; and
transmitting a complaint to the first cell if the transition information is received and the terminal camps in the terminal mode on the first cell, wherein reception of at least a predetermined number of complaints by the first cell prevents the intended transition of the first cell to the sleeping mode.

2. The terminal according to claim 1, wherein the at least one processor is additionally arranged to perform :
establishing, if the transition information is received when the terminal camps in the terminal mode on the first cell, whether the terminal may camp in the terminal mode on a second cell different from the first cell;
camping in the terminal mode on the second cell if it is established that the terminal may camp in the terminal mode on the second cell; and ceasing camping on the first cell.

3. The terminal according to claim 2, wherein the at least one processor is additionally arranged to perform:
preventing to transmit the complaint if it is established that the terminal may camp in the terminal mode on the second cell.

4. The terminal according to claim 1, wherein the at least one processor is additionally arranged to perform :
waking up the first cell if the first cell is sensed based on the sensing- enabling downlink signal; and
camping in the terminal mode on the first cell if the mode-enabling downlink signal is received from the first cell.

5. The terminal according to any of claims 1 to 4, wherein the transition information about the intended transition is comprised in a system information message.

6. The terminal according to any of claims 1 to 5, wherein the complaint is comprised in a reestablishment cause.

7. A method, comprising:
sensing a first cell based on a sensing-enabling downlink signal from the first cell, wherein the sensing-enabling downlink signal does not enable a terminal to camp in the terminal mode on the first cell, wherein the terminal mode is one of a connected mode, an idle mode and an energy savings mode;
camping on the first cell in the terminal mode, wherein, in the terminal mode, a mode-enabling downlink signal from the first cell is required;
checking if a transition information about an intended transition of the first cell to a sleeping mode is received and if the terminal performing the method camps in the terminal mode on the first cell, wherein in the sleeping mode of the first cell the mode-enabling downlink signal is not received from the first cell; and
transmitting a complaint to the first cell if the transition information is received and the terminal camps in the terminal mode on the first cell, wherein reception of at least a predetermined number of complaints by the first cell prevents the intended transition of the first cell to the sleeping mode.

8. The method according to claim 7, wherein the at least one processor is additionally arranged to perform :
establishing, if the transition information is received when the terminal camps in the terminal mode on the first cell, whether the terminal may camp in the terminal mode on a second cell different from the first cell;
camping in the terminal mode on the second cell if it is established that the terminal may camp in the terminal mode on the second cell; and ceasing camping on the first cell.

9. The method according to claim 8, wherein the at least one processor is additionally arranged to perform:
preventing to transmit the complaint if it is established that the terminal may camp in the terminal mode on the second cell.

10. A method, comprising:
transmitting, in a sleeping mode, a sensing-enabling downlink signal enabling a terminal to sense a base station;
transmitting, in a first mode of the base station, a terminal-mode- enabling downlink signal enabling the terminal to camp in the terminal mode on the base station, wherein the terminal mode is one of a connected mode, an idle mode and an energy savings mode ;
preventing to transmit, in a sleeping mode of the base station, the terminal-mode-enabling downlink signal;
informing, if the base station is in the first mode, about an intended transition of the base station from the first mode to the sleeping mode,
checking if at least a predefined number of complaints is received in response to the informing about the intended transition; and
prohibiting to transit from the first mode to the sleeping mode if at least the predefined number of complaints is received.

11. A base station, comprising
at least one processor (110),
at least one memory (120) including computer program code, and
the at least one processor, with the at least one memory and the computer program code, being arranged to cause the base station to at least perform:
transmitting, in a sleeping mode, a sensing-enabling downlink signal enabling a terminal to sense the base station;
transmitting, in a first mode of the base station, a terminal-mode- enabling downlink signal enabling the terminal to camp in the terminal mode on the base station, wherein the terminal mode is one of a connected mode, an idle mode and an energy savings mode ;
preventing to transmit, in a sleeping mode of the base station, the terminal-mode-enabling downlink signal;
informing, if the base station is in the first mode, about an intended transition of the base station from the first mode to the sleeping mode,
checking if at least a predefined number of complaints is received in response to the informing about the intended transition; and
prohibiting to transit from the first mode to the sleeping mode if at least the predefined number of complaints is received.

12. A computer program product comprising a set of instructions which, when executed on an apparatus, is configured to cause the apparatus to carry out the method according to any one of claims 7 to 10.

## Patentansprüche

1. Endgerät, das umfasst:
- wenigstens einen Prozessor (10),
- wenigstens einen Speicher (20), der einen Computerprogrammcode enthält, und
- wobei der wenigstens eine Prozessor, zusammen mit dem wenigstens einen Speicher und dem Computerprogrammcode, dafür ausgelegt ist, das Endgerät zu veranlassen, wenigstens die Schritte auszuführen:
- Abtasten einer ersten Zelle basierend auf einem eine Abtastung ermöglichenden Downlink-Signal von der ersten Zelle, wobei das eine Abtastung ermöglichende Downlink-Signal es dem Endgerät nicht ermöglicht, sich in einem Endgerätmodus auf die ersten Zelle festzulegen, wobei der Endgerätmodus ein verbundener Modus, ein Ruhemodus oder ein Energiesparmodus ist,
- Festlegen (Camping) auf die erste Zelle im Endgerätmodus, wobei im Endgerätmodus ein einen Modus ermöglichendes Downlink-Signal von der ersten Zelle angefordert wird,
- Überprüfen, ob Übergangsinformationen über einen beabsichtigten Übergang der ersten Zelle in einen Schlafmodus empfangen wurden und ob sich das Endgerät im Endgerätmodus auf die erste Zelle festgelegt hat, wobei das einen Modus ermöglichende Downlink-Signal im Schlafmodus der ersten Zelle nicht von der ersten Zelle empfangen wird, und
- Senden einer Beschwerde an die erste Zelle, wenn die Übergangsinformationen empfangen wurden und sich das Endgerät im Endgerätmodus auf die erste Zelle festgelegt hat, wobei der Empfang mindestens einer vorgegebenen Anzahl Beschwerden durch die erste Zelle den beabsichtigten Übergang der ersten Zelle in den Schlafmodus verhindert.

2. Endgerät nach Anspruch 1, wobei der wenigstens eine Prozessor zusätzlich dafür ausgelegt ist, die Schritte auszuführen:
- Feststellen, ob sich das Endgerät im Endgerätmodus auf eine zweite Zelle festlegen kann, die sich von der ersten Zelle unterscheidet, sofern die Übergangsinformationen empfangen werden, wenn sich das Endgerät im Endgerätmodus auf die erste Zelle festgelegt hat,
- Festlegen auf die zweite Zelle im Endgerätmodus, wenn festgestellt wird, dass sich das Endgerät im Endgerätmodus auf die zweite Zelle festlegen kann, und Beenden der Festlegung auf die erste Zelle.

3. Endgerät nach Anspruch 2, wobei der wenigstens eine Prozessor zusätzlich dafür ausgelegt ist, den Schritt auszuführen:
- Verhindern des Sendens der Beschwerde, wenn festgestellt wird, dass sich das Endgerät im Endgerätmodus auf die zweite Zelle festlegen kann.

4. Endgerät nach Anspruch 1, wobei der wenigstens eine Prozessor zusätzlich dafür ausgelegt ist, die Schritte auszuführen:
- Aufwecken der ersten Zelle, wenn die erste Zelle basierend auf dem eine Abtastung ermöglichenden Downlink-Signal abgetastet wird, und
- Festlegen auf die erste Zelle im Endgerätmodus, wenn das einen Modus ermöglichende Downlink-Signal von der ersten Zelle empfangen wird.

5. Endgerät nach einem der Ansprüche 1 bis 4, wobei die Übergangsinformationen über den beabsichtigten Übergang in einer Systeminformationsnachricht enthalten sind.

6. Endgerät nach einem der Ansprüche 1 bis 5, wobei die Beschwerde in einer Wiederherstellungsursache enthalten ist.

7. Verfahren, das umfasst:
- Abtasten einer ersten Zelle basierend auf einem eine Abtastung ermöglichenden Downlink-Signal von der ersten Zelle, wobei das eine Abtastung ermöglichende Downlink-Signal es einem Endgerät nicht ermöglicht, sich im Endgerätmodus auf die ersten Zelle festzulegen, wobei der Endgerätmodus ein verbundener Modus, ein Ruhemodus oder ein Energiesparmodus ist,
- Festlegen (Camping) auf die erste Zelle im Endgerätmodus, wobei im Endgerätmodus ein einen Modus ermöglichendes Downlink-Signal von der ersten Zelle angefordert wird,
- Überprüfen, ob Übergangsinformationen über einen beabsichtigten Übergang der ersten Zelle in einen Schlafmodus empfangen wurden und ob sich das das Verfahren ausführende Endgerät im Endgerätmodus auf die erste Zelle festgelegt hat, wobei das einen Modus ermöglichende Downlink-Signal im Schlafmodus der ersten Zelle nicht von der ersten Zelle empfangen wird, und
- Senden einer Beschwerde an die erste Zelle, wenn die Übergangsinformationen empfangen wurden und sich das Endgerät im Endgerätmodus auf die erste Zelle festgelegt hat, wobei der Empfang mindestens einer vorgegebenen Anzahl Beschwerden durch die erste Zelle den beabsichtigten Übergang der ersten Zelle in den Schlafmodus verhindert.

8. Verfahren nach Anspruch 7, wobei der wenigstens eine Prozessor zusätzlich dafür ausgelegt ist, die Schritte auszuführen:
- Feststellen, ob sich das Endgerät im Endgerätmodus auf eine zweite Zelle festlegen kann, die sich von der ersten Zelle unterscheidet, sofern die Übergangsinformationen empfangen werden, wenn sich das Endgerät im Endgerätmodus auf die erste Zelle festgelegt hat,
- Festlegen auf die zweite Zelle im Endgerätmodus, wenn festgestellt wird, dass sich das Endgerät im Endgerätmodus auf die zweite Zelle festlegen kann, und Beenden der Festlegung auf die erste Zelle.

9. Verfahren nach Anspruch 8, wobei der wenigstens eine Prozessor zusätzlich dafür ausgelegt ist, den Schritt auszuführen:
- Verhindern des Sendens der Beschwerde, wenn festgestellt wird, dass sich das Endgerät im Endgerätmodus auf die zweite Zelle festlegen kann.

10. Verfahren, das umfasst:
- Senden, in einem Schlafmodus, eines eine Abtastung ermöglichenden Downlink-Signals, das es einem Endgerät ermöglicht, eine Basisstation abzutasten,
- Senden, in einem ersten Modus der Basisstation, eines einen Endgerätmodus ermöglichenden Downlink-Signals, das es dem Endgerät ermöglicht, sich im Endgerätmodus auf die Basisstation festzulegen, wobei der Endgerätmodus ein verbundener Modus, ein Ruhemodus oder ein Energiesparmodus ist,
- Verhindern, in einem Schlafmodus der Basisstation, des Sendens des einen Endgerätmodus ermöglichenden Downlink-Signals,
- Informieren über einen beabsichtigten Übergang der Basisstation vom ersten Modus in den Schlafmodus, wenn sich die Basisstation im ersten Modus befindet,
- Überprüfen, ob in Antwort auf das Informieren über den beabsichtigten Übergang mindestens eine vorgegebene Anzahl Beschwerden empfangen wurde, und
- Untersagen des Übergehens vom ersten Modus in den Schlafmodus, wenn mindestens die vorgegebene Anzahl Beschwerden empfangen wurde.

11. Basisstation, die umfasst:
- wenigstens einen Prozessor (110),
- wenigstens einen Speicher (120), der einen Computerprogrammcode enthält, und
- wobei der wenigstens eine Prozessor, zusammen mit dem wenigstens einen Speicher und dem Computerprogrammcode, dafür ausgelegt ist, die Basisstation zu veranlassen, wenigstens die Schritte auszuführen:
- Senden, in einem Schlafmodus, eines eine Abtastung ermöglichenden Downlink-Signals, das es einem Endgerät ermöglicht, die Basisstation abzutasten,
- Senden, in einem ersten Modus der Basisstation, eines einen Endgerätmodus ermöglichenden Downlink-Signals, das es dem Endgerät ermöglicht, sich im Endgerätmodus auf die Basisstation festzulegen, wobei der Endgerätmodus ein verbundener Modus, ein Ruhemodus oder ein Energiesparmodus ist,
- Verhindern, in einem Schlafmodus der Basisstation, des Sendens des einen Endgerätmodus ermöglichenden Downlink-Signals,
- Informieren über einen beabsichtigten Übergang der Basisstation vom ersten Modus in den Schlafmodus, wenn sich die Basisstation im ersten Modus befindet,
- Überprüfen, ob in Antwort auf das Informieren über den beabsichtigten Übergang mindestens eine vorgegebene Anzahl Beschwerden empfangen wurde, und
- Untersagen des Übergehens vom ersten Modus in den Schlafmodus, wenn mindestens die vorgegebene Anzahl Beschwerden empfangen wurde.

12. Computerprogrammprodukt, das einen Instruktionssatz aufweist, der, wenn er in einer Vorrichtung ausgeführt wird, dafür ausgelegt ist, die Vorrichtung zu veranlassen, das Verfahren nach einem der Ansprüche 7 bis 10 durchzuführen.

## Revendications

1. Terminal, comprenant :
au moins un processeur (10),
au moins une mémoire (20) comprenant un code de programme informatique, et
l'au moins un processeur, avec l'au moins une mémoire et le code de programme informatique, qui sont agencés pour amener le terminal à exécuter au moins une étape consistant à :
détecter une première cellule sur la base d'un signal en liaison descendante d'activation de détection à partir de la première cellule, dans lequel le signal en liaison descendante d'activation de détection ne permet pas au terminal de se mettre dans un mode terminal sur la première cellule, dans lequel le mode terminal est l'un d'un mode connecté, d'un mode veille et d'un mode d'économie d'énergie ;
se mettre sur la première cellule dans le mode terminal, dans lequel, dans le mode terminal, un signal en liaison descendante d'activation de mode provenant de la première cellule est requis ;
vérifier si des informations de transition concernant une transition prévue de la première cellule à un mode veille sont reçues et si le terminal se met dans le mode terminal sur la première cellule, dans lequel dans le mode veille de la première cellule, le signal en liaison descendante d'activation de mode n'est pas reçu de la première cellule ; et
transmettre une plainte à la première cellule si les informations de transition sont reçues et que le terminal se met dans le mode terminal sur la première cellule, dans lequel la réception d'au moins un nombre prédéterminé de plaintes par la première cellule empêche la transition prévue de la première cellule au mode veille.

2. Terminal selon la revendication 1, dans lequel l'au moins un processeur est agencé en outre pour exécuter les étapes consistant à :
établir, si les informations de transition sont reçues lorsque le terminal se met dans le mode terminal sur la première cellule, si le terminal peut se mettre dans le mode terminal sur une seconde cellule différente de la première cellule ;
se mettre dans le mode terminal sur la seconde cellule si on a établi que le terminal peut se mettre dans le mode terminal sur la seconde cellule ; et cesser de se mettre sur la première cellule.

3. Terminal selon la revendication 2, dans lequel l'au moins un processeur est agencé en outre pour exécuter l'étape consistant à :
empêcher de transmettre la plainte si on a établi que le terminal peut se mettre dans le mode terminal sur la seconde cellule.

4. Terminal selon la revendication 1, dans lequel l'au moins un processeur est agencé en outre pour exécuter les étapes consistant à :
réveiller la première cellule si la première cellule est détectée sur la base du signal en liaison descendante d'activation de détection ; et
se mettre dans le mode terminal sur la première cellule si le signal en liaison descendante d'activation de mode est reçu de la première cellule.

5. Terminal selon l'une quelconque des revendications 1 à 4, dans lequel les informations de transition concernant la transition prévue sont comprises dans un message d'information de système.

6. Terminal selon l'une quelconque des revendications 1 à 5, dans lequel la plainte est comprise dans une cause de rétablissement.

7. Procédé, comprenant les étapes consistant à :
détecter une première cellule sur la base d'un signal en liaison descendante d'activation de détection à partir de la première cellule, dans lequel le signal en liaison descendante d'activation de détection ne permet pas à un terminal de se mettre dans le mode terminal sur la première cellule, dans lequel le mode terminal est l'un d'un mode connecté, d'un mode veille et d'un mode d'économie d'énergie ;
se mettre sur la première cellule dans le mode terminal, dans lequel, dans le mode terminal, un signal en liaison descendante d'activation de mode provenant de la première cellule est requis ;
vérifier si des informations de transition concernant une transition prévue de la première cellule à un mode veille sont reçues et si le terminal exécutant le procédé se met dans le mode terminal sur la première cellule, dans lequel dans le mode veille de la première cellule, le signal en liaison descendante d'activation de mode n'est pas reçu de la première cellule ; et
transmettre une plainte à la première cellule si les informations de transition sont reçues et que le terminal se met dans le mode terminal sur la première cellule, dans lequel la réception d'au moins un nombre prédéterminé de plaintes par la première cellule empêche la transition prévue de la première cellule au mode veille.

8. Procédé selon la revendication 7, dans lequel au moins un processeur est agencé en outre pour exécuter les étapes consistant à :
établir, si les informations de transition sont reçues lorsque le terminal se met dans le mode terminal sur la première cellule, si le terminal peut se mettre dans le mode terminal sur une seconde cellule différente de la première cellule ;
se mettre dans le mode terminal sur la seconde cellule si on a établi que le terminal peut se mettre dans le mode terminal sur la seconde cellule ; et cesser de se mettre sur la première cellule.

9. Procédé selon la revendication 8, dans lequel l'au moins un processeur est agencé en outre pour exécuter l'étape consistant à :
empêcher de transmettre la plainte si on a établi que le terminal peut se mettre dans le mode terminal sur la seconde cellule.

10. Procédé, comprenant les étapes consistant à :
transmettre, dans un mode veille, un signal en liaison descendante d'activation de détection permettant à un terminal de détecter une station de base ;
transmettre, dans un premier mode de la station de base, un signal en liaison descendante d'activation de mode terminal permettant au terminal de se mettre dans le mode terminal sur la station de base, dans lequel le mode terminal est l'un d'un mode connecté, d'un mode veille et d'un mode d'économie d'énergie ;
empêcher de transmettre, dans un mode veille de la station de base, le signal en liaison descendante d'activation de mode terminal ;
informer, si la station de base se trouve dans le premier mode, concernant une transition prévue de la station de base du premier mode au mode veille,
vérifier si au moins un nombre prédéfini de plaintes est reçu en réponse à l'information concernant la transition prévue ; et
empêcher le passage du premier mode au mode veille si au moins le nombre prédéfini de plaintes est reçu.

11. Station de base, comprenant :
au moins un processeur (110),
au moins une mémoire (120) comprenant un code de programme informatique, et
l'au moins un processeur, avec l'au moins une mémoire et le code de programme informatique, qui sont agencés pour amener la station de base à exécuter au moins une étape consistant à :
transmettre, dans un mode veille, un signal en liaison descendante d'activation de détection permettant à un terminal de détecter la station de base ;
transmettre, dans un premier mode de la station de base, un signal en liaison descendante d'activation de mode terminal permettant au terminal de se mettre dans le mode terminal sur la station de base, dans lequel le mode terminal est l'un d'un mode connecté, d'un mode veille et d'un mode d'économie d'énergie ;
empêcher de transmettre, dans un mode veille de la station de base, le signal en liaison descendante d'activation de mode terminal ;
informer, si la station de base se trouve dans le premier mode, concernant une transition prévue de la station de base du premier mode au mode veille,
vérifier si au moins un nombre prédéfini de plaintes est reçu en réponse à l'information concernant la transition prévue ; et
empêcher le passage du premier mode au mode veille si au moins le nombre prédéfini de plaintes est reçu.

12. Produit de programme informatique comprenant un ensemble d'instructions qui, lorsqu'il est exécuté sur un appareil, est conçu pour amener l'appareil à mettre en oeuvre le procédé selon l'une quelconque des revendications 7 à 10.
